# EUROPEAN PATENT SPECIFICATION

(11) **EP 2 001 714 B1**
(45) Date of publication and mention of the grant of the patent: **05.08.2015**
(21) Application number: 07734451.3
(22) Date of filing: 19.03.2007
(51) Int. Cl.: B60R 22/02, B60N 2/28

(54) **BELT GUIDE**
GURTFÜHRUNG
GUIDE DE CEINTURE

(30) Priority: 17.03.2006 GB 0605499
(43) Date of publication of application: 17.12.2008
(73) Proprietor: BRITAX RÖMER Kindersicherheit GmbH, D-89077 Ulm (DE)
(72) Inventor: HAAS, Martin, 89555 Steinheim (DE)
(74) Representative: Bosch, Matthias
(86) International application number: PCT/IB2007/001134
(87) International publication number: WO 2007/107881

(56) References cited:
- EP-A1- 1 514 748
- WO-A-00/40433
- WO-A-2004/000602
- WO-A-2005/123446
- WO-A-2006/129112
- DE-A1-102004 019 821
- FR-A- 2 658 458
- FR-A1- 2 861 354
- GB-A- 2 375 330
- US-A- 5 730 499

## Description

The present invention relates to a child's safety seat.

Car safety seats that enable children to be restrained in cars using seat belts already present in the car are known. Such safety seats are placed over a standard car seat and secured in position with the seat belt for that seat. The seat belt is drawn around the safety seat and across the body of the child occupant, to serve the dual purpose of securing the safety seat to the seat of the car, and the child to the safety seat.

The position of the seat belt, particularly in the region of the child's shoulder, is important. If the seat belt passes too close to the child's neck, this will cause uncomfortable rubbing and can impart undesirable forces to the neck of the child in the event of an accident. On the other hand, if the seat belt does not pass close enough to the child's neck, the belt is likely to slip off the child's shoulder, leading to obvious dangers in the event of the car suddenly stopping or turning.

The importance of the position of the seat belt in the region of the child's shoulder is illustrated by reference to figures 22 to 25 of the accompanying drawings, which show side and front views of a child 1 seated in a safety seat 2 secured in position on a standard car seat 3 by a seat belt 4. In figures 22 and 23, the seat belt is drawn from a dispenser mounted in the region of the rear parcel shelf, whereas in figures 24 and 25, the seat belt is drawn from a dispenser mounted on the side door pillar of the car. In both cases it can be seen that, at the point where the seat belt passes over the child's shoulder, the seat belt is not close enough to the child's neck, and is likely to slip off the child's shoulder.

To address this problem, some known safety seats employ a belt guide in the form of a broad hook through which the seat belt passes. The belt guide is formed in the head rest of the safety seat, so as to guide the seat belt in the region of the child's shoulder.

In GB 2 375 330 A a seat belt positioning arrangement is provided that can enable a vehicle shoulder belt to be adjusted quickly and easily to an angle and a height where it will comfortably extend over the upper torso of a passenger secured in a seat by the same. More specifically, a seat belt positioning arrangement is described that enables the angle and the height of a shoulder belt to be adjusted to avoid contact with the face, neck or throat of a secured passenger.

However, the effectiveness of known belt guides depends on the position and orientation (angle) of the belt guide relative to the seat belt. This is a problem because the mounting arrangements for seat belts differ from car to car, so that the angle of the seat belt entering the belt guide from above varies, with a consequent variation in the angle and position of the seat belt below the belt guide in the region of the child's shoulder. For example, a belt guide that correctly guides a seat belt drawn from a dispenser mounted in the region of the rear parcel shelf, may not correctly guide a seat belt drawn from a dispenser mounted on the side door pillar.

Thus, a belt guide designed to secure a safety seat and child occupant safely and comfortably in one car may well be ineffective, or worse, detrimental in another car.

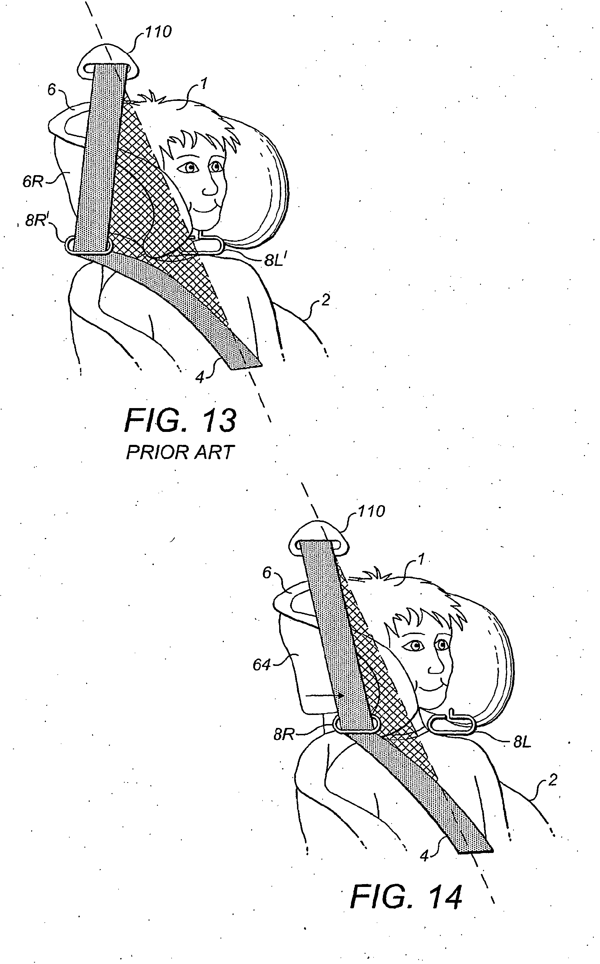

This problem is illustrated by reference to figure 13 of the accompanying drawings, which shows a safety seat having a belt guide 8R' extending from the wing portion 6R of the head rest 6 of a safety seat 2. Here, the belt guide has been designed for use with a seat belt drawn from a dispenser mounted in the region of the rear parcel shelf. However, in figure 13, the seat belt 4 is drawn from a dispenser 110 mounted on the side door pillar. In this case, the seat belt 4 has to be drawn backwards to the belt guide 8R', causing a 90 degree bend in the seat belt at the point where it passes through the belt guide. As a result, the seat belt is prevented from sliding smoothly through the belt guide, which can interfere with the correct functioning of the inertia mechanism of the dispenser mechanism.

It will be appreciated that similar problems occur where a belt guide designed for use with a seat belt drawn from a dispenser mounted on the side door pillar is used with a seat belt drawn from a dispenser in the region of the rear parcel shelf.

In addition to preventing the seat belt from sliding smoothly through the belt guide, variations in seat belt mounting arrangements can result in the seat belt rubbing uncomfortably against the child's shoulder and neck, or more seriously, in the child/safety seat not being held securely in place by the seat belt, despite the presence of the belt guide.

The problem is compounded for safety seats which have adjustable head rests to accommodate children of different sizes. Such seats are desirable because a single safety seat can be adjusted to accommodate a child as it increases in size, avoiding the need to purchase seats of different sizes.

Belt guides are generally formed in the head rest of the safety seat, so that the position of the belt guide is adjusted together with the head rest to allow for different shoulder heights, cf. WO 00/40433 A, WO 2005/123446 A or WO 2004/000602 in accordance with the preamble of claim 1 of the present invention.

However, the angle of the seat belt entering the belt guide changes depending on the position at which the head rest is adjusted, with a consequent effect on the angle and position of the seat belt below the belt guide, in the region of the child's shoulder.

For example if the belt guide is too high or too low with respect to the seat belt, the seat belt will have to bend through a significant angle where it passes through the belt guide, and will be prevented from passing smoothly therethrough. In addition, the seat belt may be caused to rub uncomfortably against the child's shoulder and neck, or more seriously, may not hold the child/safety seat in place sufficiently securely.

For these reasons it is difficult to design a safety seat whose belt guide is able to guide the seat belt correctly over the full desired range of adjustability of the head rest.

It is an object of the present invention to overcome the aforementioned problems.

This object is achieved by the child safety seat comprising a belt guide incorporated within a head rest of the child safety seat as defined by independent claim 1.

Further advantageous features of the present invention are defined by the dependent claims.

Accordingly, when a seat belt is passed through the guide member, the tension in the belt causes the belt guide to automatically move into a suitable position and/or orientation for guiding the belt.

The guide surface may be rotatably movable and/or the guide member may be slidably moveable. Further, the guide surface may be rotatable and/or moveable along a substantially vertical axis and/or a substantially horizontal axis.

The belt guide preferably further comprises a support, in which case the guide member is preferably formed with a support follower which is moveably mounted in relation to the support, such that the guide member is movable relative to the support for adopting alternative belt guiding positions and/or orientations.

The support thus prevents the belt guide from guiding the seat belt in such a way that it is likely to cause uncomfortable rubbing to the occupant of the safety seat, or to slip off the shoulder of the occupant.

According to an embodiment of the present invention, the guide member is formed with a support follower which is moveably mounted in relation to the support, such that the guide member is movable relative to the support for adopting alternative belt guiding positions and/or orientations.

Accordingly, the belt guide can be positioned to effectively guide the seat belt when the seat belt enters the belt guide at different angles. At the same time the support prevents the belt guide from guiding the seat belt in such a way that it is likely to cause uncomfortable rubbing to the occupant of the safety seat, or to slip off the shoulder of the occupant.

The support follower is preferably rotatable relative to the support, and may be rotatable about a substantially vertical axis and/or a substantially horizontal axis.

Thus, the guide member is able to twist into a suitable orientation for guiding the seat belt.

Further, the support follower is preferably slidable relative to the support.

Thus, the guide member is able to slide into a suitable position for guiding the seat belt.

The support follower may be slidable along a path defined by the support. The support may define a substantially horizontal path and/or a substantially vertical path along which the support follower is slidable. The path defined by the support may be a curved path.

The support follower may be rotatable about an axis of the support and/or about an axis of the guide member.

In an embodiment, the guide member may comprise a connecting portion connecting the guide surface to the support follower, the connecting portion comprising a flexible portion for allowing (multi-directional) movement of the guide surface relative to the support follower.

Thus, the guide member is able to bend and twist into a suitable position/orientation for guiding the seat belt.

In one embodiment, the support may comprise a channel, which may have a substantially capital T-shaped cross section. Alternatively, the channel may have a substantially circular cross section. Where the support comprises a channel, the support follower conveniently comprises an abutment for engaging with and moving along the channel. In the case where the channel has a capital T-shaped cross section, the abutment is conveniently substantially disk-shaped for engaging with the T-shape channel. In the case where the channel has a substantially circular cross section, the abutment is conveniently substantially spherical for engaging with the substantially circular channel.

In another embodiment, the support may comprise a rail, which may have a substantially circular cross section. In this case, the support follower conveniently comprises a loop for engaging with and moving along the rail. The loop may be a substantially circular ring.

The support may extend internally or externally of the head rest.

Preferably, the support defines a path extending in a region substantially vertically above a shoulder of an occupant of a safety seat when the head rest is mounted to a safety seat and the safety seat is occupied.

Thus, the region within which the guide member is free to move is always approximately above the shoulder of an occupant of the safety seat.

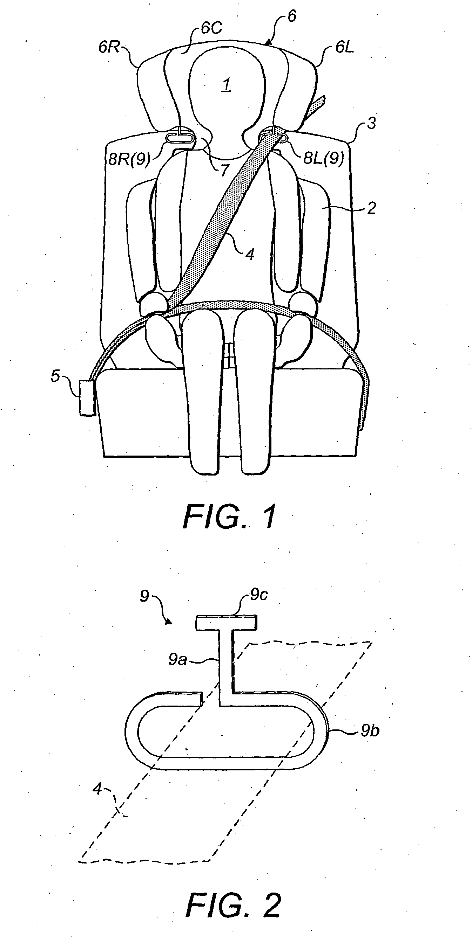

Examples of the present invention will now be described with reference to the accompanying drawings in which:-
Figure 1 shows a child's safety seat incorporating a belt guide embodying the present invention;
Figure 2 is an enlarged view of a guide member of a belt guide embodying the present invention, with a seat belt shown in dashed outline passing therethrough;

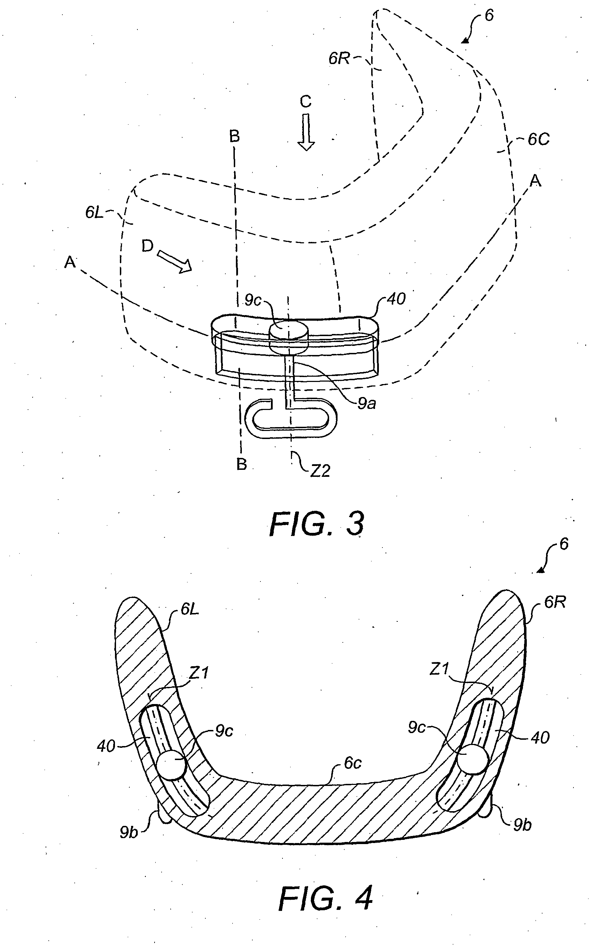

Figure 3 is an enlarged view of the head rest of the safety seat shown in figure 1, showing the internal structure of the belt guide;
Figure 4 is a cross sectional view from above along the line A-A of the head rest shown in figure 3;

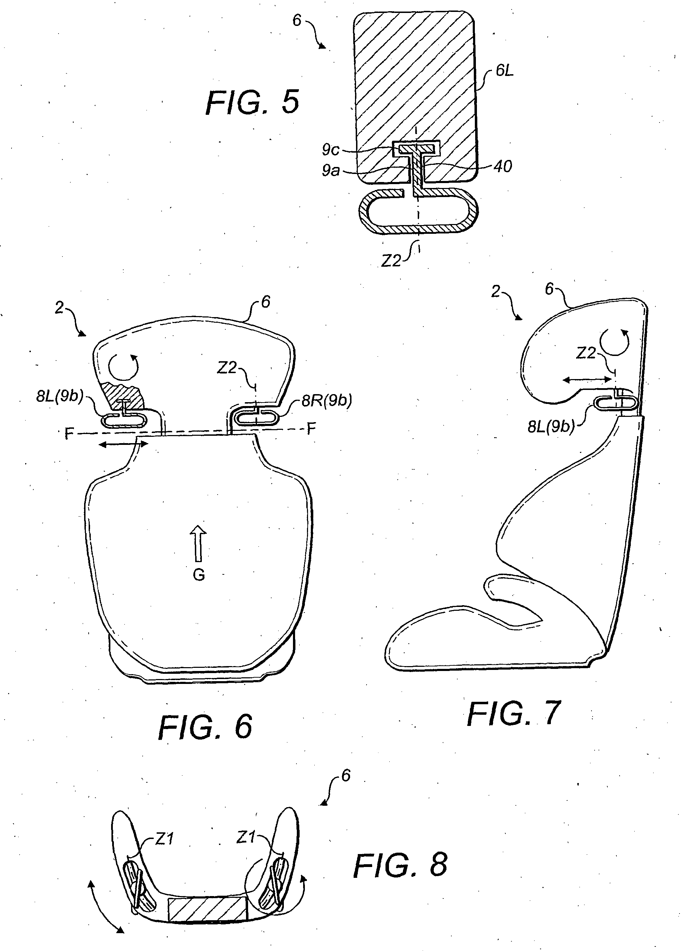

Figure 5 is a cross sectional view from the side along the line B-B of the head rest shown in figure 3;
Figure 6 is a rear partially cut-away view of a child's safety seat incorporating a belt guide embodying the present invention, indicating possible movement of the guide member;
Figure 7 is a side view of the safety seat shown in figure 6 indicating possible movement of the guide member;
Figure 8 8 is a cross sectional view from below along the line F-F of the safety seat shown in figure 6 indicating possible movement of the guide member;

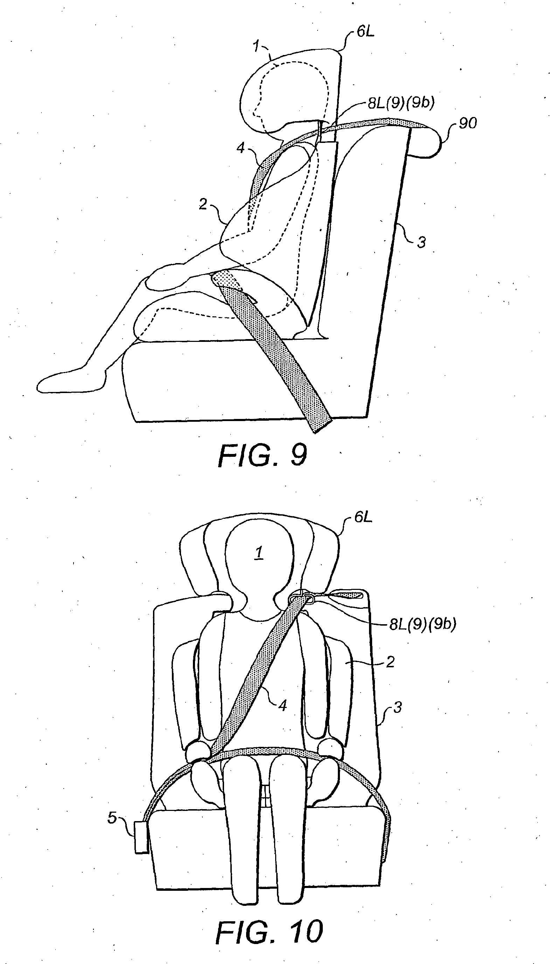

Figure 9 is a side view of a safety seat showing operation of a belt guide embodying the present invention with a seat belt drawn from a dispenser mounted in the region of the rear parcel shelf;
Figure 10 is a front view of the safety seat in the situation shown in figure 9;

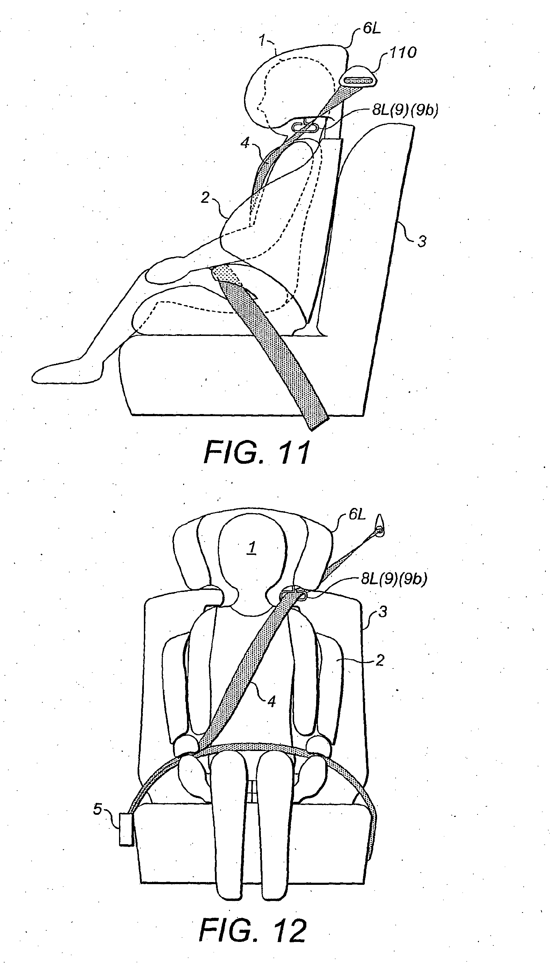

Figure 11 is a side view of a safety seat showing operation of a belt guide- embodying the present invention with a seat belt drawn from a dispenser mounted on the side door pillar;
Figure 12 is a front view of the safety seat in the situation shown in figure 11;
Figure 13 shows a child secured in a safety seat by a seat belt, using a previously known fixed belt guide;
Figure 14 is a similar view to that of figure 13, illustrating the improvements achieved with the belt guide of the present invention;

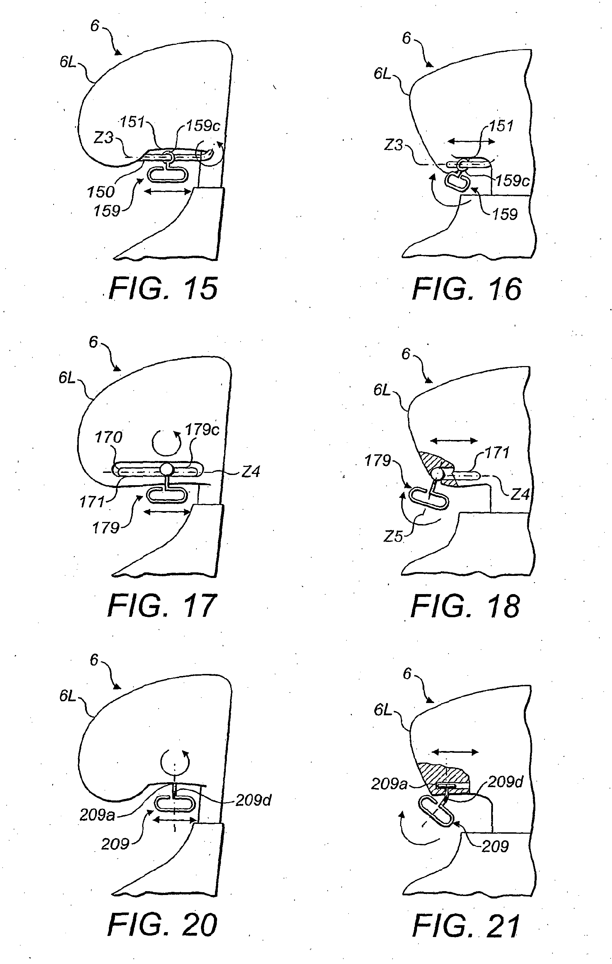

Figure 15 is a side view of a head rest incorporating an alternative belt guide embodying the present invention;
Figure 16 is rear view of the head rest and belt guide shown in figure 15;
Figure 17 is a side view of a head rest incorporating another alternative belt guide embodying the present invention;
Figure 18 is rear partially cut away view of the head rest and belt guide shown in figure 17;

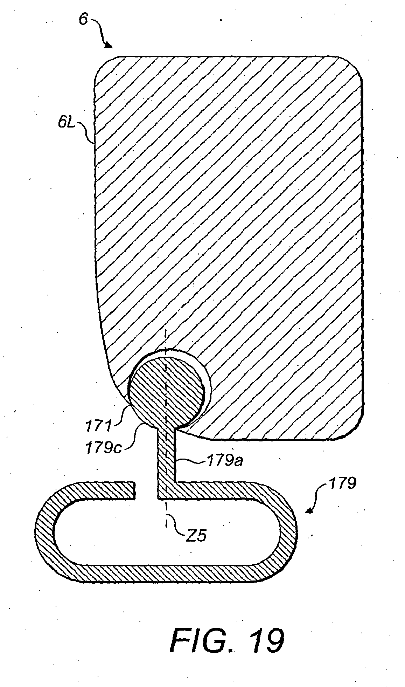

Figure 19 is a cross sectional view of the head rest and belt guide shown in figures 17 and 18;
Figure 20 is a side view of a head rest incorporating yet another alternative belt guide embodying the present invention;
Figure 21 is a rear partially cut-away view of the head rest and belt guide shown in figure 17;

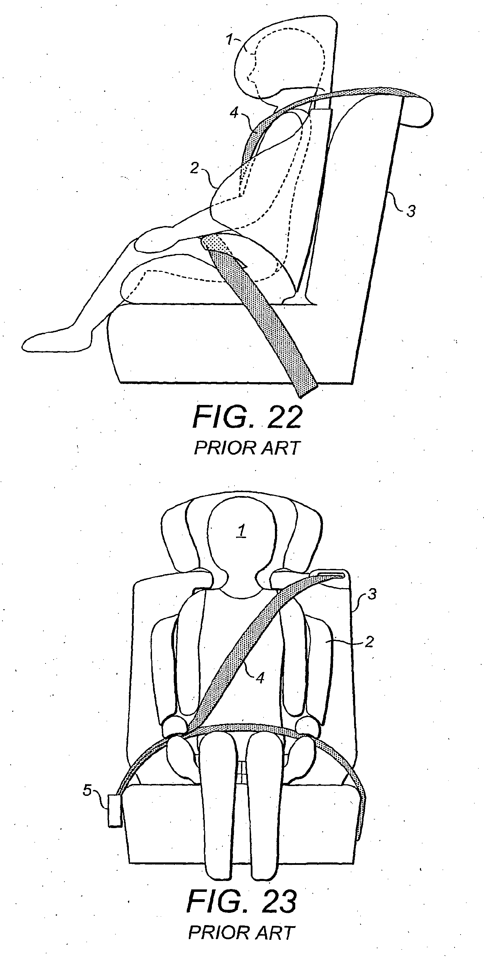

Figure 22 is a side view of a child seated in a safety seat with no belt guide secured to a car seat by a seat belt drawn from a dispenser mounted in the region of a rear parcel shelf;
Figure 23 is a front view of the situation shown in figure 22;

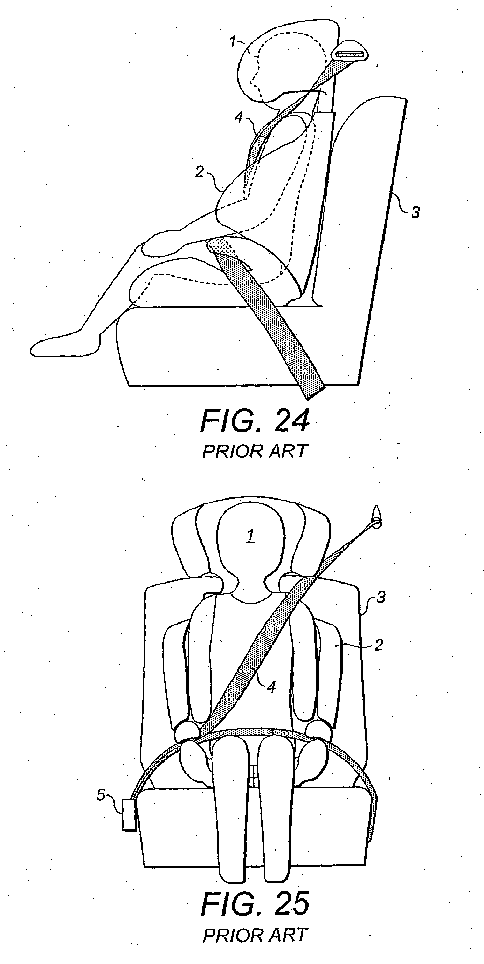

Figure 24 is a side view of a child seated in a safety seat with no belt guide secured to a car seat by a seat belt drawn from a dispenser mounted on a side door panel;
Figure 25 is a front view of the situation shown in figure 24.

Components common to different embodiments bear common reference numerals.

The terms right and left used herein refer to right and left for an occupant of the safety seat.

Figure 1 shows a child 1 seated in a safety seat 2. Both the child 1 and the safety seat 2 are secured to a left-side car seat 3 by a seat belt 4 which extends diagonally downwards across the child's body to a locking mechanism 5 provided in the lower cushion of the car seat 3 to the right of the safety seat 2. A lap portion of the seat belt extends from the locking mechanism 5, over the child's lap and back to the lower cushion of the car seat 3, to the left of the safety seat.

The safety seat 2 has a head rest 6 mounted at the top of a neck portion 7. The neck portion is slidable upwards and downwards with respect to the main body of the safety seat 2, and can be fixed in a plurality of positions. By sliding the neck portion 7 between these fixed positions, the head rest 6 can be adjusted to a plurality of heights above the main body of the safety seat to accommodate children of different sizes.

The head rest 6 comprises a central portion 6C and right and left wing portions 6R, 6L which project outwards and forwards from the central portion 6C to support the child's head. The right and left wing portions 6R, 6L thus extend substantially vertically above the right and left shoulders of the child.

Right and left belt guides 8R, 8L embodying the present invention are provided in the right and left wing portions 6R, 6L respectively. Each of the belt guides comprises a guide member (bracket) 9 for guiding the seat belt 4, suspended above the child's shoulder level from the wing portions 6R, 6L of the head rest 6. An enlarged view of a guide member 9 is shown in figure 2, with the seat belt 4 shown in dashed outline. The guide member 9 comprises an arm 9a, which extends vertically downwards from the head rest 6, when installed therein. At the bottom of the arm 9a, the guide member 9 is bent round to form a hook 9b, with a flat base providing a guide surface broad enough for a standard seat belt to pass over, as shown in, figure 2. To prevent the seat belt slipping off the hook 9b, the end of the hook 9b is bent up and round to return to a position close to the bottom of the arm 9a. A small gap is left between the end of the hook 9b and the arm 9a, to allow the seat belt to be threaded into and removed from the guide member 9.

In figure 1, the seat belt 4 extends through the guide member 9 of the left belt guide 8L. The right belt guide 8R is not used in the situation shown in figure 1 because the safety seat is located on the left-side car seat. However, if the safety seat were to be located on the right-side car seat, the seat belt would extend over the right shoulder of the child. In this situation the right belt guide 8R would be used instead of the left belt guide 8L.

As will be understood from the more detailed description below, the guide member 9 of the right and left belt guides 8R, 8L are free to move in certain directions relative to the right and left wing portions 6R and 6L of the head rest 6. In this way the belt guides 8R, 8L are able to self-adjust in terms of position and orientation in response to the angle and position of the seat belt 4 as it enters the guide member.

Figure 3 is a perspective view of the head rest 6 shown in figure 1, illustrating the internal structure of the head rest 6 that forms part of the belt guide 8L. For clarity, the head rest is depicted.as transparent, with the external structure shown in dashed outline, so that the structure of the belt guide 8L formed inside the head rest is visible. It will be appreciated that although the structure of the right belt guide 8R is not shown in figure 3, the following description is equally applicable thereto.

Figure 4 is a cross sectional view of the head rest taken along the line A-A of figure 3, viewed in the direction indicated by the arrow C. Figure 5 is a cross sectional view of the head rest taken along the line B-B of figure 3, viewed in the direction indicated by the arrow C.

As can be seen from figures 3 to 5, an elongate channel 40 with a substantially constant upper-case T-shaped cross section extends along a curved horizontal axis Z1 within the head rest 6, from where the left wing portion 6L meets the central portion 6C of the head rest 6, to approximately half way along the left wing portion 6L. The longitudinal axis Z1 of the channel 40 lies substantially parallel to the front and back faces of the wing portion 6L. The channel 40 thus follows the curve of the wing portion 6L. The bottom of the T-shape opens onto the bottom face of the wing portion 6L.

The guide member 9 is suspended within the channel 40 by a circular nut 9c provided at the top of the arm 9a. The nut 9c lies within the "cross-bar" part of the T-shape of the channel 40, and the arm 9a extends downwardly therefrom through the "stem" part of the T shape, to emerge below the head rest 6.

As can be seen from figure 3, the diameter of the nut 9c is slightly smaller than the width of the "cross-bar" part of the T-shape. Further, the diameter of the arm 9a is slightly smaller than the width of the "stem" part. As a result, the guide member 9 is free to slide along the length of the channel, and is free to rotate about the longitudinal axis Z2 of the arm 9a. The ability of the guide member 9 to move within the channel 40 is illustrated in figures 6 to 8, in which the direction of movement is indicated by solid black arrows.

Figure 6 shows the safety seat 2 viewed from the back. A portion of the head rest 6 in the region of the left belt guide 8L is shown as cut away, so that the internal structure of the belt guide 8L is visible. Figure 7 shows a side view of the safety seat 2. Figure 8 shows a cross sectional view of the safety seat 2, taken along the line F-F of figure 6, and viewed in the direction of the arrow G.

As a result of the ability of the guide member 9 to slide and rotate in the channel 40, the belt guides 8R and 8L are able to self-adjust. That is to say, when a seat belt is inserted through the hook 9b, the tension in the seat belt causes the guide member 9 to move automatically to a suitable position and orientation. At the same time, the limits imposed on the movement of the guide member 9 by the channel 40 prevent the guide member 9 from moving to a position where the seat belt 4 will not hold the child 1 and' safety seat 2 securely.

Accordingly, the belt guides are able to guide a seat belt correctly, irrespective of the how the seat belt is mounted, and irrespective of the height of the belt guide relative to the seat belt.

Figures 9 to 12 show how a safety seat 2 with a belt guide 8L embodying the present invention works with differently mounted seat belts. For simplicity, the right belt guide is not shown in figures 9 to 12.

Figures 9 and 10 are respectively side and front views of a child 1 seated in a safety seat 2 and secured to a car seat 3 by a seat belt 4 drawn from a dispenser 90 mounted in the region of the rear parcel shelf. Here it can be seen that the guide member 9 of the belt guide 8L has located itself towards the back of the wing portion 6L, and is orientated such that the hook 9b is substantially perpendicular to the direction in which the seat belt 4 extends.

Figures 11 and 12 are similar views to those of figures 9 and 10, where the seat belt 4 extends from a dispenser 110 mounted on the side door pillar. Here it can be seen that the guide member 9 of the belt guide 8L is located further forward than in the example shown in figures 9 and 10, and that, again, the guide member 9 is orientated such that the hook 9b is substantially perpendicular to the direction in which the seat belt 4 extends.

In both of the examples shown in figures 9 to 12, it can be seen that the child and the safety seat are securely held in place by the seat belt 4.

Figure 14 illustrates the operation of a belt guide 8R embodying the present invention as compared to the operation of a presently known fixed belt guide 8R', shown in figure 13 and discussed above.

As can be seen from figure 14, with the present invention the tension in the seat belt 4 causes the belt guide 8R to move in the direction of the black arrow. As a result, the bend in the seat belt 4 at the point where it passes through the belt guide 8R is dramatically reduced as compared with the situation shown in figure 13. Accordingly, the seat belt 4 is able to pass smoothly through the belt guide 8R, to hold the child 1 (and the safety seat 2) in place on the car seat 3 comfortably and securely.

The present invention has been described above in the context of a guide member which is able to slide and rotate within a channel. However, alternative embodiments are also envisaged.

For example, figures 15 and 16 show a belt guide comprising a rail 150 which extends horizontally within a recess 151 formed in the bottom of the wing portion 6L of a head rest 6.

In this embodiment, the guide member 159 is similar to the guide member 9 of the previously described embodiment, except that a ring 159c is provided in place of the nut 9c. The ring portion fits around the rail 150, with an inner diameter slightly larger than the diameter of the rail 150. Thus, the guide member 159 is able to slide freely along the rail, and to rotate freely about the rail, as indicated by the black arrows in figures 15 and 16.

The length and horizontal position of the rail 150 with respect to the head rest 6 is substantially the same as for the channel 40 of the previous embodiment. Thus, the path along which the guide member 159 can slide is substantially the same as the path along which the guide member 9 of the previous embodiment can- slide. However, in the previous embodiment, the guide member 9 was rotatable about a longitudinal axis Z2 of the arm 9a of the guide member 9 (see figure 5), whereas in the embodiment of figures 15 and 16, the guide member 159 is rotatable about the longitudinal axis Z3 of the rail 150.

A further embodiment of the present invention is illustrated in figures 17 to 19. In this embodiment the guide member 179 is similar to the guide member 9/159 of the previously described embodiments, except that a ball 179c is provided in place of the nut 9c/ring 159c.

The ball 179c is mounted within a channel 170. The channel 170 is similar to the guide channel 40 of the first described embodiment, except that the channel 170 has a substantially circular cross section rather than an upper-case T-shaped cross section. As shown in figure 19, the channel 170 opens out onto the lower rear face of the wing portion 6L, forming a slot 171 therein.

The length and horizontal position of the channel 170 with respect to the head rest 6 is substantially the same as for the channel 40 of the previous embodiment. Thus, the path along which the guide member 179 can slide is substantially the same as the path along which the guide member 9 of the first embodiment can slide. However, in the first embodiment, the shape of the channel 40,and the nut 9c prevents the guide member 9 from rotating about the longitudinal axis Z1 of the guide channel 40. In contrast, with the embodiment of figures 17 to 19, the substantially circular cross section of the channel 170 in cooperation with the shape of the ball 179c allows the guide member to rotate about both the longitudinal axis Z5 of the arm 179a and the longitudinal axis Z4 of the channel 170.

A further embodiment of the present invention is illustrated in figures 20 and 21. Here the arrangement is identical to the arrangement of the first described embodiment, except that the arm 209a of the guide member 209 comprises a flexible portion 209d. Thus, the guide member 209 is able to slide and rotate as described for the first embodiment, and also to bend as illustrated in figure 21.

In addition to the above described embodiments, it is envisaged that aspects of the different embodiments could be combined. For example, the flexible portion of the embodiment of figures 20 and 21 could be incorporated in any of the other above described embodiments.

In the above described embodiments the guide member is able to slide substantially horizontally. However, embodiments in which the guide member is able to slide diagonally and/or substantially vertically instead of or as well as sliding horizontally are also envisaged.

## Claims

1. A child safety seat (2) comprising a belt guide (8R, 8L) incorporated within an adjustable head rest (6) of the child safety seat (2),
wherein the belt guide (8R, 8L) comprises a guide member (9) having a guide surface for guiding a belt (4), **characterised in that**
the guide surface is configured to be moveable for self-adjustment in response to forces applied by the belt (4) when guided over the guide surface, so as to automatically move into a suitable belt guiding position and/or orientation in relation to the head rest (6) in which the belt (4) is guided correctly over the shoulder of an occupant of the child safety seat (2) when the child safety seat (2) is occupied by the occupant.

2. A child safety seat (2) as claimed in claim 1,
wherein the guide surface is rotatably movable and/or the guide member (9) is slidably, movable.

3. A child safety seat (2) as claimed in claim 1 or 2,
wherein the guide surface is rotatable about a substantially vertical axis and/or about a substantially horizontal axis, and/or
wherein the guide surface is movable along a substantially vertical axis and/or along a substantially horizontal axis.

4. A child safety seat (2) as claimed in any preceding claim,
wherein the belt guide (8R, 8L) further comprises a support and
wherein the guide member (9) is formed with a support follower which is moveably mounted in relation to the support, such that the guide member (9) is movable relative to the support for adopting alternative belt guiding orientations.

5. A child safety seat (2) as claimed in claim 4,
wherein the support follower is rotatable and/or slidable relative to the support.

6. A child safety seat (2) as claimed in claim 4 or 5,
wherein the support follower is rotatable about a substantially vertical axis and/or about a substantially horizontal axis and/or
wherein the support defines a substantially horizontal path and/or a substantially vertical path along which the support follower is slidable.

7. A child safety seat (2) as claimed in claim 6,
wherein the support follower is rotatable about an axis of the support and/or about an axis of the guide member (9).

8. A child safety seat (2) as claimed in any one of claims 4 to 7,
wherein the guide member (9) comprises a connecting portion connecting the guide surface to the support follower, the connecting potion comprising a flexible portion for allowing movement of the guide surface relative to the support follower.

9. A child safety seat (2) as claimed in any one of claims 6 to 8,
wherein the support comprises a channel (40).

10. A child safety seat (2) as claimed in claim 9,
wherein the channel (40) has a capital T-shaped cross section or a substantially circular cross section.

11. A child safety seat (2) as claimed in claim 9,
wherein the support follower comprises an abutment for engaging with and moving along the channel (40).

12. A child safety seat (2) as claimed in claim 11,
wherein the abutment is substantially disk-shaped for engaging with the T-shaped channel (40) or substantially spherical for engaging with the substantially circular channel (40).

13. A child safety seat (2) as claimed in any one of claims 6 to 8,
wherein the support comprises a rail (150) and
wherein the support follower comprises a loop for engaging with and moving along the rail (150).

14. A child safety seat (2) as claimed in any one of claims 4 to 13,
wherein the support defines a path extending in a region substantially vertically above a shoulder of the occupant of the child safety seat (2) when the head rest (6) is mounted to the child safety seat (2) and the child safety seat (2) is occupied by the occupant.

## Patentansprüche

1. Kindersitz (2) mit einer Gurtführung (8R, 8L), die in einer verstellbaren Kopfstütze (6) des Kindersitzes (2) enthalten ist,
wobei die Gurtführung (8R, 8L) ein Führungselement (9) aufweist, welches eine Führungsfläche zum Führen eines Gurts (4) hat,
**dadurch gekennzeichnet, dass**
die Führungsfläche dazu konfiguriert ist, zur automatischen Einstellung im Ansprechen auf Kräfte, die von dem Gurt (4) aufgebracht werden, wenn er über die Führungsfläche geführt wird, bewegbar zu sein, um sich automatisch in eine geeignete Gurtführungsposition und/oder -ausrichtung bezüglich der Kopfstütze (6) zu bewegen, in der der Gurt (4) korrekt über die Schulter eines Insassens des Kindersitzes (2) geführt wird, wenn der Kindersitz (2) von dem Insassen besetzt ist.

2. Kindersitz (2) nach Anspruch 2,
wobei die Führungsfläche drehend bewegbar ist und/oder das Führungselement (9) gleitend bewegbar ist.

3. Kindersitz (2) nach Anspruch 1 oder 2,
wobei die Führungsfläche um eine im Wesentlichen vertikale Achse und/oder um eine im Wesentlichen horizontale Achse drehbar ist, und/oder
wobei die Führungsfläche entlang einer im Wesentlichen vertikalen Achse und/oder entlang einer im Wesentlichen horizontalen Achse bewegbar ist.

4. Kindersitz (2) nach einem der vorhergehenden Ansprüche,
wobei die Gurtführung (8R, 8L) des Weiteren eine Stütze aufweist, und
wobei das Führungselement (9) mit einem Stützenmitnehmer ausgebildet ist, der bezüglich der Stütze bewegbar angebracht ist, so dass das Führungselement (9) bezüglich der Stütze bewegbar ist, um andere Gurtführungsausrichtungen anzunehmen.

5. Kindersitz (2) nach Anspruch 4,
wobei der Stützenmitnehmer bezüglich der Stütze drehbar und/oder gleitend ist.

6. Kindersitz (2) nach Anspruch 4 oder 5,
wobei der Stützenmitnehmer um eine im Wesentlichen vertikale Achse und/oder um eine im Wesentlichen horizontale Achse drehbar ist; und/oder
wobei die Stütze einen im Wesentlichen horizontalen Pfad und/oder einen im Wesentlichen vertikalen Pfad definiert, entlang dessen der Stützenmitnehmer gleiten kann.

7. Kindersitz (2) nach Anspruch 6,
wobei der Stützenmitnehmer um eine Achse der Stütze und/oder um eine Achse des Führungselements (9) drehbar ist.

8. Kindersitz (2) nach einem der Ansprüche 4 bis 7,
wobei das Führungselement (9) einen Verbindungsabschnitt aufweist, der die Führungsfläche mit dem Stützenmitnehmer verbindet, wobei der Verbindungsabschnitt einen flexiblen Abschnitt aufweist, um die Bewegung der Führungsfläche bezüglich des Stützenmitnehmers zu gestatten.

9. Kindersitz (2) nach einem der Ansprüche 6 bis 8,
wobei die Stütze einen Kanal (40) aufweist.

10. Kindersitz (2) nach Anspruch 9,
wobei der Kanal (40) einen T-förmigen Querschnitt oder einen im Wesentlichen kreisförmigen Querschnitt hat.

11. Kindersitz (2) nach Anspruch 9,
wobei der Stützenmitnehmer einen Anschlag zum Eingriff in den und zum Bewegen entlang des Kanals (40) aufweist.

12. Kindersitz (2) nach Anspruch 11,
wobei der Anschlag im Wesentlichen scheibenförmig ist, um in den T-förmigen Kanal (40) einzugreifen, oder im Wesentlichen kugelförmig, um in den im Wesentlichen kreisförmigen Kanal (40) einzugreifen.

13. Kindersitz (2) nach einem der Ansprüche 6 bis 8,
wobei die Stütze eine Schiene (150) aufweist, und
wobei der Stützenmitnehmer eine Schlaufe zum Eingreifen in und zum Bewegen entlang der Schiene (150) aufweist.

14. Kindersitz (2) nach einem der Ansprüche 4 bis 13,
wobei die Stütze einen Pfad definiert, der sich in einem Bereich im Wesentlichen vertikal über einer Schulter des Insassens des Kindersitzes (2) erstreckt, wenn die Kopfstütze (6) an dem Kindersitz (2) angebracht ist und der Kindersitz (2) von dem Insassen besetzt ist.

## Revendications

1. Siège (2) de sécurité pour enfant comprenant un guide (8R, 8L) de ceinture incorporé à l'intérieur d'un appui-tête (6) ajustable du siège (2) de sécurité pour enfant,
dans lequel le guide (8R, 8L) de ceinture comprend un élément guide (9) ayant une surface guide pour guider une ceinture (4),
**caractérisé en ce que** la surface guide est configurée pour être mobile pour un auto-ajustement en réponse à des forces appliquées par la ceinture (4) lorsqu'elle est guidée sur la surface guide, de façon à se mettre automatiquement dans une position et/ou une orientation appropriée(s) de guidage de ceinture par rapport à l'appui-tête (6) dans lequel la ceinture (4) est guidée correctement par-dessus l'épaule d'un occupant du siège (2) de sécurité pour enfant lorsque le siège (2) de sécurité pour enfant est occupé par l'occupant.

2. Siège (2) de sécurité pour enfant selon la revendication 1,
dans lequel la surface guide est mobile en rotation et/ou l'élément guide (9) est mobile en coulissement.

3. Siège (2) de sécurité pour enfant selon la revendication 1 ou 2,
dans lequel la surface guide est rotative autour d'un axe sensiblement vertical et/ou autour d'un axe sensiblement horizontal, et/ou
dans lequel la surface guide est mobile le long d'un axe sensiblement vertical et/ou le long d'un axe sensiblement horizontal.

4. Siège (2) de sécurité pour enfant selon une quelconque revendication précédente,
dans lequel le guide (8R, 8L) de ceinture comprend en outre un support
et
dans lequel l'élément guide (9) est formé avec un prolongateur de support qui est monté de façon mobile par rapport au support, de telle sorte que l'élément guide (9) est mobile par rapport au support pour adopter d'autres orientations de guidage de ceinture.

5. Siège (2) de sécurité pour enfant selon la revendication 4,
dans lequel le prolongateur de support est rotatif et/ou coulissant par rapport au support.

6. Siège (2) de sécurité pour enfant selon la revendication 4 ou 5,
dans lequel le prolongateur de support est rotatif autour d'un axe sensiblement vertical et/ou autour d'un axe sensiblement horizontal, et/ou
dans lequel le support définit un chemin sensiblement horizontal et/ou un chemin sensiblement vertical le long duquel/desquels le prolongateur de support est coulissant.

7. Siège (2) de sécurité pour enfant selon la revendication 6,
dans lequel le prolongateur de support est rotatif autour d'un axe du support et/ou autour d'un axe de l'élément guide (9).

8. Siège (2) de sécurité pour enfant selon l'une quelconque des revendications 4 à 7,
dans lequel l'élément guide (9) comprend une partie de connexion connectant la surface guide au prolongateur de support, la partie de connexion comprenant une partie flexible pour permettre un mouvement de la surface guide par rapport au prolongateur de support.

9. Siège (2) de sécurité pour enfant selon l'une quelconque des revendications 6 à 8,
dans lequel le support comprend un canal (40).

10. Siège (2) de sécurité pour enfant selon la revendication 9,
dans lequel le canal (40) a une section transversale en forme de T majuscule ou une section transversale sensiblement circulaire.

11. Siège (2) de sécurité pour enfant selon la revendication 9,
dans lequel le prolongateur de support comprend une butée pour un engagement avec le et un déplacement le long du canal (40).

12. Siège (2) de sécurité pour enfant selon la revendication 11,
dans lequel la butée est sensiblement en forme de disque pour un engagement avec le canal (40) en forme de T ou sensiblement sphérique pour un engagement avec le canal (40) sensiblement circulaire.

13. Siège (2) de sécurité pour enfant selon l'une quelconque des revendications 6 à 8,
dans lequel le support comprend un rail (150) et
dans lequel le prolongateur de support comprend une boucle pour un engagement avec le et un déplacement le long du rail (150).

14. Siège (2) de sécurité pour enfant selon l'une quelconque des revendications 4 à 13,
dans lequel le support définit un chemin s'étendant dans une région sensiblement verticalement au-dessus d'une épaule de l'occupant du siège (2) de sécurité pour enfant lorsque l'appui-tête (6) est monté sur le siège (2) de sécurité pour enfant et que le siège (2) de sécurité pour enfant est occupé par l'occupant.
